# EUROPEAN PATENT SPECIFICATION

(11) **EP 0 314 962 B1**
(45) Date of publication and mention of the grant of the patent: **02.03.1994**
(21) Application number: 88117151.6
(22) Date of filing: 14.10.1988
(51) Int. Cl.: H04B 7/005

(54) **Automatic transmit power level control in radio links**
Leistungspegelsteuerung in Funkverbindungen
Contrôle automatique du niveau de puissance d'émission dans des liaisons radio

(30) Priority: 04.11.1987 IT 2251587
(43) Date of publication of application: 10.05.1989
(73) Proprietor: ALCATEL ITALIA Società per Azioni, 20149 Milano (IT)
(72) Inventor: Nannicini, Maurizio, I-20050 Monza MI (IT); Vismara, Luigi, I-20059 Vimercate MI (IT)
(74) Representative: Strehl Schübel-Hopf Groening & Partner

(56) References cited:
- EP-A- 0 230 691
- GB-A- 2 132 454
- US-A- 4 309 771

## Description

The present invention refers to an automatic power control (APC) system in signal transmissions between transmitting and receiving stations via radio link, specifically radio links using digital modulation techniques.

An embodiment of the invention refers to the radio links using multilevel QAM modulation in multiline systems equippable with up to 11 + 1 radio channels.

Automatic power control in radio transmission is described in the literature. Specifically, US-A-4.004.224 describes a method whereby the operation of all transmitters in a link takes place, during no-fading periods, with a power level lower than that normally used in the periods during which there is fading. In fading periods, the transmit power in the link is automatically increased by a command sent to the transmitter by the remote receiver associated therewith, on an auxiliary channel. Each transmitter-associated remote receiver set requires a power control device comprised of a received power level detector; a comparator which compares the signal corresponding with this level to a reference value, a modulator which modulates the said control signal and inserts it in the high frequency transmission system used for the information signal. Obviously, the said APC device also includes a control signal demodulator, that drives a power amplifier gain regulator circuit.

In US-A-4.495.648 relevant to a type of automatic power control, a proportionality is established in the transmitter-associated receiver set (for example, Rx/Tx A) between the level of the received signal (V₁₁) and the amplitude of a dc voltage (Vdc) at the output from the automatic gain control (AGC) circuit in the receiver. The frequency of the ac voltage (Vac) at the output from an FM switch is proportional to the amplitude of the Vdc voltage. In the transmitter the transmit signal V₁₂ is amplitude modulated by a modulating signal at a frequency equal to that of the Vac voltage. Consequently the FM-AM modulation superimposed to the transmit signal carries the information of the received signal level.

In Rx/Tx B the amplitude modulation frequency of the received signal V₁₃ determines the frequency of an ac voltage (Vac) at the output from the AGC circuit in the receiver. The amplitude of the Vdc voltage output from a FM discriminator, which is proportional to the frequency of the Vac voltage, controls the power level output from the transmit RF amplifier.

Consequently the level of the V₁₀ signal transmitted by transmitter 10 is related to the level of the V₁₁ signal received by receiver 11.

These and other conventional embodiments techniques are not easily applicable to all transmission systems using digital modulation, for example to multi level QAM systems. In addition, whereas mention is made in these techniques to the need of complying with the linearity requirements of the transmission circuits and the interference problems, they do not propose any solutions that may be effectively applied to radio equipment using multi level QAM modulation systems. Also, there are no specific references to the use of the APC technique in communications systems comprised of several radio channels.

The object of the present invention is an automatic transmit power control (APC) technique that does not present the drawbacks mentioned hereabove and specifically has no restrictions in its applications.

Another purpose of the invention is to provide an automatic power control (APC) that is specifically effective in radio transmissions using multilevel QAM modulation.

A further objective of the invention is to provide an APC for radio link systems comprised of several RF channels (multiline systems), using digital service channel equipment, preferably multiplexers and digital drop/insert devices, for transmitting the control signals necessary to control the said RF channels.

Another purpose of the invention is to provide an APC with a continuous control of the transmitter linearity and a simultaneous substantial reduction of the interference problems.

These and other objectives are achieved by the transmit power control system defined in claim 1.

Preferred embodiments of the invention are specified in the sub-claims.

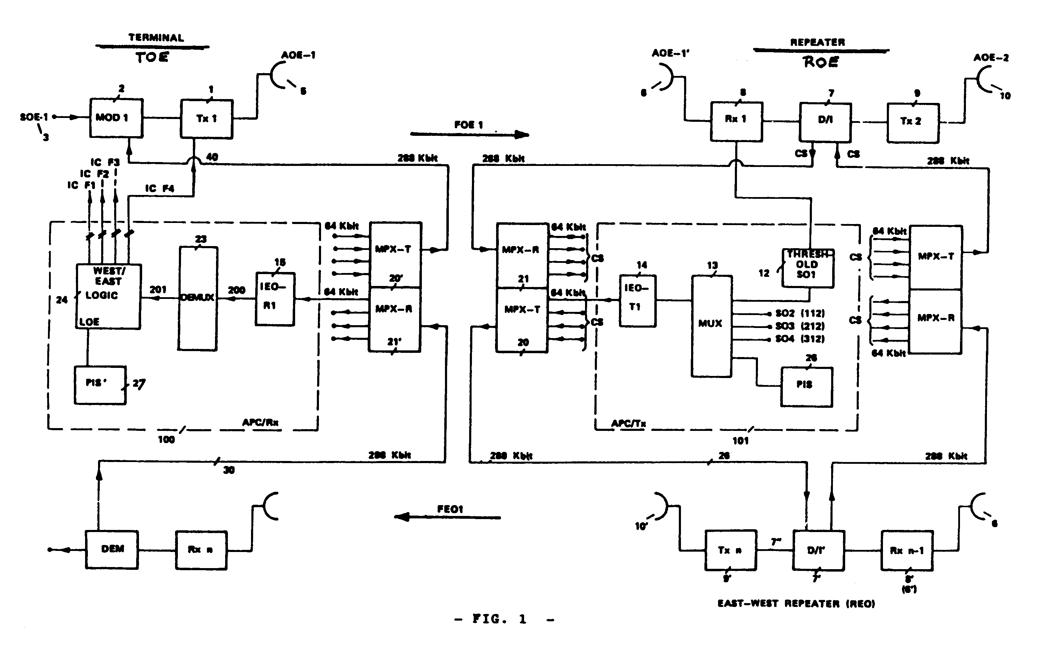

The various features and advantages of the present invention will be better understood through the preferred (but not limiting) embodiments illustrated in the attached drawings, wherein figures 1 through 4 are functional block diagrams.

Fig. 1 is a functional block diagram of the system in accordance with the present invention, applied, as an example, to the transmission-reception of four RF channels in the west to east direction, and four radio channels in the east to west direction. For sake of simplicity, fig. 1 shows only one terminal TOE, specifically that from west to east, comprised of a modulator MOD. 1 (2) which modulates the information signal to transmit SOE.1 (3); the actual transmitter TX1 (1) and the respective antenna AOE-1 (5). The repeater receiver ROE conventionally includes the correspondig receiver RX1 (8) connected with antenna AOE-1' (6) followed by a service channel (CS) drop/insert (D/I) circuit (7) and a transmitter TX2 (9) connected with antenna AOE-2 (10) that is part of the subsequent radio hop.

A threshold circuit SO₁ (12) associated with each of the receivers RX1 (8) (the remaining ones, RX2, RX3 and RX4, are not shown) outputs a digital signal to an information multiplexer MUX (13) that also receives the remaining threshold signals SO₂ (112), SO₃ (212) and SO₄ (312) and generates a frame, for example at a bit rate of 64 Kbit/s, carrying the information coming from the threshold circuits to be sent back in the west direction, through an appropriate east-west interface circuit IEO-T1 (14), for example of the standard G.703 contradirectional type.

The signal output from interface IEO-T1 (14) (at a bit rate of 64 Kbit/s) is subsequently fed to the transmit section MPX-T (20) of a service multiplexer, wherein it is multiplexed together with other (for example, three) similar signals at 64 Kbit/s; the service multiplexer outputs on line 26 a signal at, for example, 288 Kbit/s that is fed to drop/insert equipment D/I' (7') of the east-west repeater REO (6'), that feeds signal 7'' via transmitter TXn (9') to antenna 10'. The signal radiated by the antenna reaches receiver RXn, where it is demodulated in the DEM block and fed through line 30 to demultiplexer MPX-R (receive side) (21'). MPX-R outputs the various signals (four in the case considered) at 64 Kbit/s, one of which is fed to interface IEO-R1 (15), the output signal (200) of which is demultiplexed and paralleled in DEMUX (23).

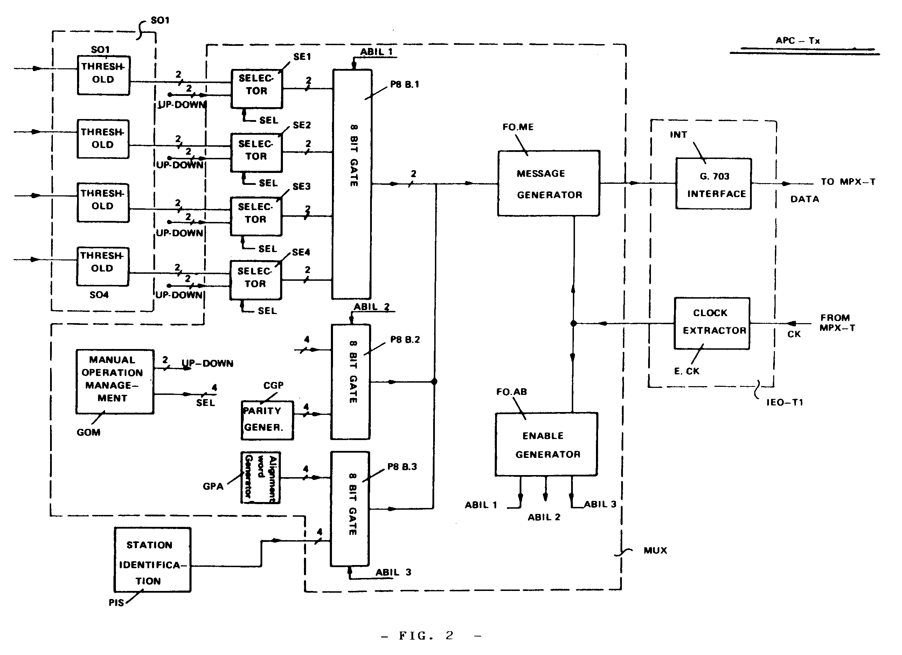

The output signal 201 is processed in a "West/East" logic LOE (24) that performs a number of critical functions:
1) extracts the station identification word PIS inserted by 26 and compares it to a word PIS' generated locally in 27;
2) extracts the information necessary to control the transmit powers of the individual RF channels ICF1, ICF2, ICF3, ICF4 (the case considered shows only four channels). The control signal, for example ICF4, is typically applied to transmitter TX1 (1) through line 40 and specifically, as it will be better explained later on, to the pre-distortion circuit in the amplifier of TX1;
3) performs filtering and alarm management functions on the received signals, so as to protect the APC system from faults and malfunctions of the digital channel used to transmit the APC information;
4) manages the local and remote manual control operations. Fig. 2 is a functional block diagram of a preferred embodiment of the APC/TX, i.e. that associated with the transmitter and enclosed in dashed rectangle 101 in fig. 1.

Fig. 2 shows for threshold circuits, SO1 through SO4, relevant to the four controlled RF channels of one direction (for example east to west,E-O). These signals are sent to four selector circuits, SE1 through SE4, which also receive a manual operation control message UP/DOWN, and a manual/automatic select command SEL, both coming from the manual operation management circuit (GOM).

The 8-bit word from the four selector circuits, SE1 - SE4, is stored in a 8-bit gate P8B.1. An 8-bit gate P8B.2 receives and stores four manual/automatic select information bits SEL, coming from the manual operation management circuit GOM, and four parity bits coming from a parity generator circuit CGP. An 8-bit gate P8B.3 receives and stores four alignment bits coming from an alignment word generator circuit GPA, and four station identification bits coming from the station identification word generator circuit PIS. The three 8-bit gates are enabled alternatively under the control of an enable generator circuit FO.AB, and the 8-bit words are serialized in a message generator circuit FO.ME. The 64 Kbit/s output from FO.ME is sent to a G.703 interface INT and from here to the transmit section of the service channel multiplex used, MPX-T.

The timing signals for message generator FO.ME and enable generator FO.AB circuits are supplied by a clock extractor circuit E.CK, which receives a 64 KHz clock CK from the transmit section of the service multiplex.

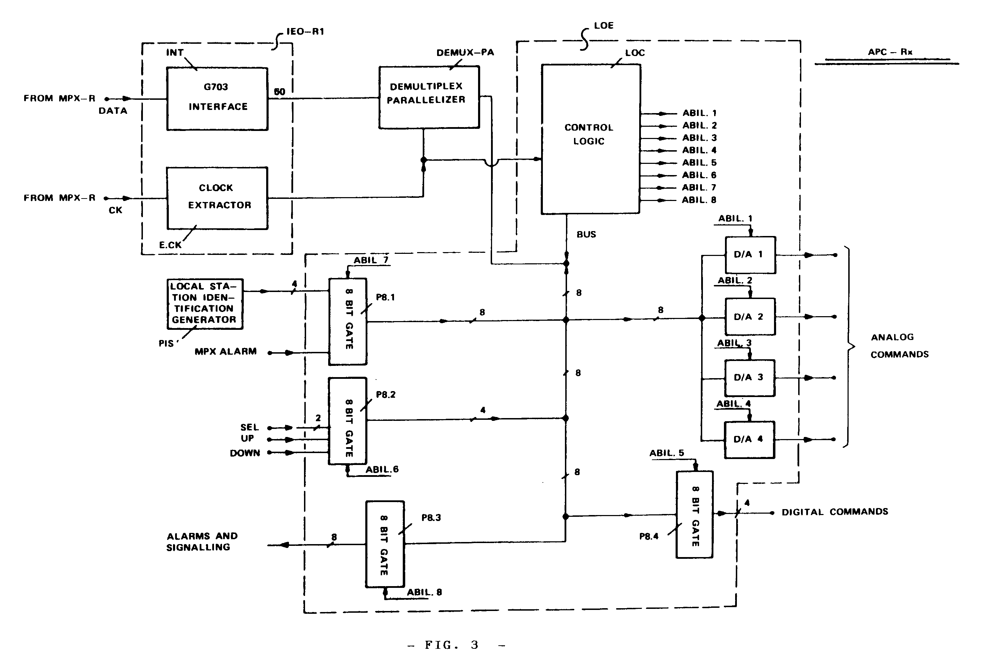

Fig. 3 is a functional block diagram of a preferred embodiment of the APC/Rx, i.e. that associated to the receiver and enclosed in dashed rectangle 100 in fig. 1. In fig. 3 the signal received from the receive section of service channel multiplex MPX-R is fed to an interface circuit INT, for example of the G703 type, the output from which (50) is fed to a demultiplexer-parallelizer block DEMUX-PA that outputs the information bits on a bus (BUS), for example an 8-bit bus, connected with a control logic LOC. The 64 KHz clock signal CK, also received from the receive section of the service channel multiplex MPX-R, is fed to the clock extractor circuit E.CK that provides the timing signals necessary for the said demultiplex-parallelizer DEMUX-PA and the control logic LOC. The said control logic LOC also receives on the bus, from a 8-bit gate P8.1, the station identification word locally generated by a station identification word local generator PIS', and a service channel multiplex alarm, if any. The control logic also receives on the bus, from the 8-bit gate P8.2, the local manual-automatic select information SEL and the transmit power increase-decrease commands UP/DOWN, which, if the local manual operating mode has been selected for a channel, make it possible to by-pass the corresponding remote command. The same control logic LOC processes all information received on the bus (both that generated in the local station and that generated in the remote station) and outputs, through the bus, the following information:
a) to an 8-bit gate P8.4: the information relevant to the 4 digital control signals that will be sent by the 8-bit gate P8.4 to the four radio transmitters controlled;
b) to the four digital/analog converters D/A1-D/A4: the digital information relevant to the continuous power control, that is transformed by the four D/A circuits into an equal number of analog control signals that are subsequently applied to the four radio transmitters controlled;
c) to an 8-bit gate P8.3: the alarm and signalling information.

The control logic manages the 8-bit gates and the D/A converters by means of appropriate enabling signals ABIL.1 to ABIL.8.

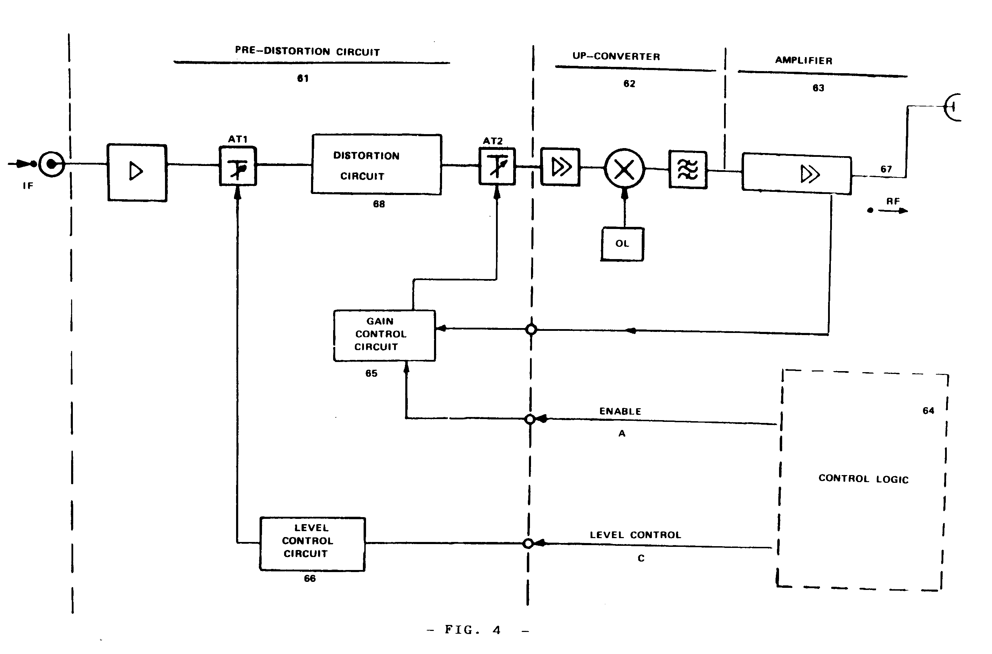

Fig. 4 is a functional block diagram of a transmitting section comprised of a pre-distortion circuit 61, an up-converter 62 and an RF amplifier 63. This functional block diagram emphasizes the operating method used to automatically control the transmit power level.

This operating method makes use of two distinct commands coming from control logic 64, one of which is an enabling command A and the other is a transmit power level control command C.

Whenever the automatic control system is activated (under fading conditions), enabling signal A operates in such a way that circuit 65, that controls the amplifier gain, stores and keeps the said gain stored for all the time during which the automatic control system is operational.

Transmit power level control signal C, which is activated simultaneously with signal A, regulates the attenuation of AT1, via circuit 66, so as to implement the desired power level variation at the transmitter output on line 67. Level control signal C operates onto attenuator AT1 and results in a decreased attenuation, and consequently in an increased transmit power level, whenever a fading condition occurs, whereas it results in an increased attenuation and consequently in a decreased transmit power level whenever the fading condition disappears.

The variation of attenuation in AT1 produced by control circuit 66 and driven by signal C is continuous. The operation on attenuator AT1 to increase and decrease the transmit power level is accompanied by a simultaneous increase and decrease of distortion generated by distortion circuit 68.

By operating as described hereabove, the distortion generated by circuit 68 varies exactly by the same amount as the distortion of amplifier 63 in function of its output power level.

Since the distortion generated by distortion circuit 68 is complementary to that of amplifier 63, the overall distortion of the transmitter is kept stably at a low value.

Among the most significant features and advantages of the invention, we mention the following ones:
1) The power control is implemented inside a pre-distortion circuit associated with the transmitter, so as to activate it during the percentages of time when power is increased (0.01% of the time) and desactivate it when the system operates at a reduced power level; this solution is such that the microwave power amplifier operates under high linearity conditions for almost all the time (99.99%), which is a requirement for the aforementioned multilevel QAM systems, without loosing the corrective effect of the pre-distortion circuit during the small period of time during which the power level is the maximum one.
2) The regulation of the transmit power level takes place continuously. The nominal power level (i.e. the attenuation with respect to the max. transmitter power level) and the APC circuit operating threshold, are determined. The APC circuit operating threshold increases the transmit power within the operating range of the driver, according to the law of variation of the fading.
3) The proposed APC system is applicable to high capacity digital radio links using multilevel QAM modulation systems and its embodiment according to the invention is very well suitable for expanding the system configurations up to 11+1 RF channels.
4) A station identification system has been introduced, to prevent the risk of receiving an APC control signal coming from a different station in the case of the operation of a protection circuit, for example because of a drop/insert circuit by-passed in a repeater station.
5) The system takes full advantage of control message convalidation techniques, whereby the transmit power level is frozen at the nominal level in the case of faults or malfunctions in the channel used to transmit the information (see, for example, the logic present in APC/RX (100)).
6) The system includes a manual maintenance control providing facilities for local and remote controlled operations.
7) The system characteristics of the proposed solution and their implementing modes make it possible an easy expansion of the power control to system configurations comprised of several RF channels, up to max. 11 + 1.
8) It is also highligthed that the automatic transmit power level control in accordance with the present invention does not affect at all the pre-existing local transmit power control, which counteracts variations in the environmental operating conditions and components aging.

## Claims

1. A transmit power control system for multiline radio links using microwave signal digital modulation, specifically multilevel QAM modulation, wherein each RF transmitter (1) receives from the receiver (8) associated therewith a signal indicating the level of useful signals received via the corresponding RF channel and sent back to the associated transmitter, in order to regulate the transmit power level, characterized by
means (12) for deriving a threshold signal for each RF channel in each receiver (8),
means (13) for multiplexing all threshold signals from the individual receivers,
means (26) for applying a station identification signal to the multiplexing means (13),
means (20) for further multiplexing the multiplexed signal with other service signals,
means (7') for inserting this twice multiplexed signal in the frame of the main information signal sent in the other direction of transmission,
means (RXn, 21', 23) for receiving and twice demultiplexing the received signal,
means (27, 24) for processing the demultiplexed signal so as to derive therefrom a transmit power level control signal, which is protected from possible faults or malfunctions in the main transmit digital channel, and the station identification signal, and
means (64) for applying the transmit power level control signal to a pre-distortion circuit (61) of the power amplifier (61) in the transmitter (1).

2. The system of claim 1, including means (GOM) for permitting the power level control to be performed manually.

3. The system of claim 1, wherein the pre-distortion circuit (61) includes means (68) for correcting the distortion of the power amplifier (63) in the transmitter (1) only during periods of time when the transmit power level is maximum.

4. The system of anyone of claims 1 to 3, wherein the pre-distortion circuit (61) includes means (65) for rendering a conventional automatic transmit power control circuit operative in periods of time when the automatic remote power control is inoperative, and for maintaining the previously acquired condition in periods of time when the automatic remote power control is operative.

## Patentansprüche

1. Sendepegelregelungssystem für Mehrkanal-Funkverbindungen unter Verwendung digitaler Mikrowellensignalmodulation, speziell Mehrpegel-QAM-Modulation, wobei jeder HF-Sender (1) von dem ihm zugeordneten Empfänger (8) ein Signal empfängt, das den Pegel von Nutzsignalen anzeigt, wie sie über den entsprechenden HF-Kanal empfangen werden, und das an den zugeordneten Sender zurückgesendet wird, um den Sendeleistungspegel einzuregeln, gekennzeichnet durch:
- eine Einrichtung (12) zum Erzeugen eines Schwellenwertsignals für jeden HF-Kanal in jedem Empfänger (8);
- eine Einrichtung (13) zum Multiplexen aller Schwellenwertsignale von den einzelnen Empfängern;
- eine Einrichtung (26) zum Anlegen eines Stationskennungssignals an die Multiplexeinrichtung (13);
- eine Einrichtung (20) zum weiteren Multiplexen des gemultiplexten Signals mit anderen Dienstsignalen;
- eine Einrichtung (7') zum Einfügen dieses doppelt gemultiplexten Signals in den Rahmen des Hauptinformationssignals, das in der anderen Senderichtung gesendet wird;
- eine Einrichtung (RXn, 21', 23) zum Empfangen und doppelten Demultiplexen des empfangenen Signals;
- eine Einrichtung (27, 24) zum Verarbeiten des demultiplexten Signals, um aus diesem ein Sendepegel-Regelungssignal zu gewinnen, das vor möglichen Fehlern oder Fehlfunktionen im digitalen Hauptübertragungskanal geschützt ist, um das Stationskennungssignal zu gewinnen; und
- eine Einrichtung (64) zum Anlegen des Sendepegelregelungssignals an eine Vorverzerrungsschaltung (61) des Leistungsverstärkers (61) im Sender (1).

2. System nach Anspruch 1, mit einer Einrichtung (GOM), die es erlaubt, daß die Leistungspegelsteuerung von Hand ausgeführt wird.

3. System nach Anspruch 1, bei dem die Vorverzerrungsschaltung (61) eine Einrichtung (68) aufweist, die dazu dient, die Verzerrung des Leistungsverstärkers (63) im Sender (1) nur in solchen Zeitspannen zu korrigieren, in denen der Sendeleistungspegel maximal ist.

4. System nach einem der Ansprüche 1 bis 3, bei dem die Vorverzerrungsschaltung (61) eine Einrichtung (65) aufweist, um eine herkömmliche automatische Sendepegelregelungsschaltung in Zeitspannen zu aktivieren, in denen die automatische Pegelfernregelung inaktiv ist, und um den zuvor erlangten Zustand in Zeitspannen beizubehalten, in denen die automatische Pegelfernregelung aktiv ist.

## Revendications

1. Système de commande de puissance d'émission pour liaisons radio multi-lignes utilisant une modulation numérique de signaux hyperfréquence, spécifiquement une modulation d'amplitude en quadrature de phase multi-niveau, dans lequel chaque émetteur RF (1) reçoit du récepteur (8) qui lui est associé un signal indiquant le niveau de signaux utiles reçus par l'intermédiaire du canal RF correspondant et renvoyés à l'émetteur associé, de façon à réguler le niveau de puissance d'émission, caractérisé par
un moyen (12) pour obtenir un signal de seuil pour chaque canal RF dans chaque récepteur (8),
un moyen (13) pour multiplexer tous les signaux de seuil provenant des récepteurs individuels,
un moyen (26) pour appliquer un signal d'identification de station au moyen de multiplexage (13),
un moyen (20) pour multiplexer en outre le signal multiplexé avec d'autres signaux de service,
un moyen (7') pour insérer ce signal deux fois multiplexé dans le cadre du signal d'informations principal émis dans l'autre direction d'émission,
des moyens (RXn, 21', 23) pour recevoir et démultiplexer deux fois le signal reçu,
des moyens (27, 24) pour traiter le signal démultiplexé de manière à en dériver un signal de commande de niveau de puissance d'émission, qui est protégé vis-à-vis de défauts ou de dysfonctionnements possibles dans le canal numérique d'émission principal, et le signal d'identification de station, et
un moyen (64) pour appliquer le signal de contrôle de niveau de puissance d'émission à un circuit de prédistorsion (61) de l'amplificateur de puissance (61) dans l'émetteur (1).

2. Système selon la revendication 1, comprenant un moyen (GOM) pour permettre d'effectuer manuellement la commande du niveau de puissance.

3. Système selon la revendication 1, dans lequel le circuit de prédistorsion (61) comprend un moyen (68) pour corriger la distorsion de l'amplificateur de puissance (63) dans l'émetteur (1) seulement pendant les périodes de temps pendant lesquelles le niveau de puissance d'émission est maximal.

4. Système selon l'une quelconque des revendications 1 à 3, dans lequel le circuit de prédistorsion (61) comprend des moyens (65) pour rendre un circuit de commande de puissance d'émission automatique classique opérationnel pendant des périodes de temps pendant lesquelles la commande de puissance automatique à distance n'est pas opérante, et pour maintenir la condition précédemment acquise pendant des périodes de temps pendant lesquelles la commande de puissance automatique à distance est opérationnelle.
